# EUROPÄISCHE PATENTSCHRIFT

(11) **EP 3 547 012 B1**
(45) Veröffentlichungstag und Bekanntmachung des Hinweises auf die Patenterteilung: **05.08.2020**
(21) Anmeldenummer: 19164575.3
(22) Anmeldetag: 22.03.2019
(51) Int. Cl.: G02C 5/22

(54) **BRILLENBÜGELSCHARNIER**
SPECTACLES HINGE
CHARNIÈRE DE MONTURE DE LUNETTES

(30) Priorität: 26.03.2018 DE 102018107126
(43) Veröffentlichungstag der Anmeldung: 02.10.2019
(73) Patentinhaber: Temming Holding GmbH, 33334 Gütersloh (DE)
(72) Erfinder: Temming, Markus, 33615 Bielefeld (DE)
(74) Vertreter: Rolf, Gudrun

(56) Entgegenhaltungen:
- EP-A1- 2 757 406
- WO-A1-2006/117206
- WO-A1-2009/147318
- WO-A1-2013/087525
- WO-A1-2013/105598
- KR-B1- 100 919 464

## Beschreibung

Die Erfindung betrifft ein Brillenbügelscharnier eines Brillengestells gemäß dem Oberbegriff des Hauptanspruches.

Es ist ein Brillenbügelscharnier eines Brillengestells bekannt, EP 2 757 406 B1, bzw. deren prioritätsbegründende DE 10 2013 100 477 B3, das aus einer Brillenbacke aus vertikal angeordnetem Flachmaterial mit einer darin eingebrachten horizontalen Längsausnehmung im Gelenkbereich besteht, die zwei zueinander gerichtete und parallel voneinander beabstandete Vorsprünge aufweist und aus einer Scharnierachse mit beidseitigen stirnseitigen Aufnahmeschlitzen für die Vorsprünge der Längsausnehmung, mit einem Abstand der Böden der Abstandschlitze zueinander, der dem Abstand der Vorsprünge entspricht, wobei ein in die Längsausnehmung eingreifender Gelenkbereich eines Brillenbügels mit einer vertikalen Aufnahmeöffnung eine solche Bauhöhe aufweist, die es erlaubt, im Gelenkbereich des Brillenbügels stirnseitige radiale Montageschlitze darin einzubringen, die während einer Montage parallel zu den stirnseitigen Aufnahmeschlitzen in der Scharnierachse und zu den Vorsprüngen in der Längsausnehmung im Gelenkbereich der Brillenbacken ausgerichtet werden können.

Bei einem dagegen sehr flachen Brillenbügel mit einer Dicke, die der Dicke der bekannten Brillenbacke entspricht und deren Dickenmaße nur etwa einen Millimeter oder weniger aufweisen, lässt sich allerdings kein Montageschlitz anordnen, da ein solcher die Dauerhaltbarkeit und die Funktionssicherheit eines damit ausgestatten Brillenbügelscharniers nachhaltig vermindern würde.

Ein anderes bekanntes Brillenbügelscharnier eines Brillengestells, US 2014/0352110 A1, weist ein gabelförmiges Brillenbügelende oder eine gabelförmige Brillenbacke aus vertikal angeordnetem Flachmaterial auf, mit im Gelenkbereich zueinander gerichteten Vorsprüngen, die jeweils von oben und unten in zwei zylindrische Funktionsbuchsen eingreifen, die zusammen die Schwenkachse in einer Brillenbacke oder in einem Brillenbügelende bilden, wobei die beiden Gabelenden jedoch von einem separaten Clip zusammengehalten werden müssen, um ein dauerhaltbares Brillenbügelscharnier zu erzeugen, der jedoch bei Verlust zu einem sofortigen Zerfall des Brillenbügelscharniers führt.

Ein weiteres bekanntes Brillenbügelscharnier, WO 2013/105598 A1, weist ebenfalls ein flaches vertikales Brillenbügelende auf, mit vor dem Gelenkbereich angeordneter Einführöffnung und mit im Gelenkbereich parallel zueinander ausgebildeten Klemmflächen für schlitzförmige Gleitflächen von flachen horizontalen Gleitplatten des flachen Backenteils des Brillengestells und mit zum Einführen zu überwindenden Verriegelungsvorsprüngen, die jedoch mechanisch auch leicht wieder entgegen der Montagerichtung überwunden werden können, sodass damit kein auf Dauer robustes Brillenscharnier zur Verfügung gestellt werden kann.

Aufgabe der Erfindung ist es, ein Brillenbügelscharnier eines Brillengestells aus einer Brillenbacke aus einem Flachmaterial geringer Dicke und einem Brillenbügel, welcher mindestens in seinem Gelenkbereich ebenfalls aus Flachmaterial geringer Dicke besteht, zur Verfügung zu stellen, welches wie das des bekannten Brillenbügelscharniers wenig Bauteile aufweist, einfach und leicht zu montieren und zu demontieren ist und trotz seiner geringen Materialstärke ein belastbares dauerhaltbares Funktionsteil bildet, ohne dass jedoch ein Bügel ungewollt aus dem Scharniergelenk einer Brille entfernt werden kann.

Die Lösung dieser Aufgabe ergibt sich in Verbindung mit den Merkmalen des Oberbegriffes dadurch, dass der Brillenbügel im Gelenkbereich aus rechtwinklig gegen den Gelenkbereich der Brillenbacke verdrehtem Flachmaterial besteht und dass in die Aufnahmeöffnung des Brillenbügels eine Funktionsbuchse verdrehfest eingesetzt ist, die einen nach unten daraus hervorstehenden Kragen aufweist, der mit einen stirnseitigen radialen Montageschlitz versehen ist und in einer Montageposition des Brillenbügels der Montageschlitz mit den stirnseitigen Aufnahmeschlitzen der Scharnierachse und den Vorsprüngen fluchtet.

Die Verwendung einer gegenüber dem bekannten Brillenbügelscharnier zusätzlichen Funktionsbuchse erlaubt es, den Gelenkbereich eines auch aus Flachmaterial bestehenden Brillenbügels mit einer geschlossenen Aufnahmeöffnung auszustatten, sodass der Gelenkbereich nicht mechanisch geschwächt wird. Dagegen kann die verdrehfest in der Aufnahmeöffnung gelagerte Funktionsbuchse mit einem Kragen vorzugsweise nach unten aus der Aufnahmeöffnung herausragen, der vorteilhafterweise stirnseitig mit einem radialen Montageschlitz ausgestattet ist, der sich allerdings nicht bis in die Funktionsbuchse fortsetzt, sodass auch die Bauteilfestigkeit des Kragens auf Dauer gewährleistet ist, da er mit der Funktionsbuchse einteilig ausgebildet ist.

Weitere vorteilhafte Ausgestaltungen des Gegenstandes des erfinderischen Brillenbügelscharniers ergeben sich aus und in Kombination mit den nachfolgenden Unteransprüchen.

Gemäß einer besonders bevorzugten Ausführungsform der Erfindung ist der der Kragenseite zugeordnete Vorsprung der Längsausnehmung so lang ausgebildet ist, wie das Maß der Länge des dazugehörigen Aufnahmeschlitzes der Scharnierachse beträgt oder nur geringfügig kürzer und der gegenüberliegende Vorsprung ebenfalls so lang wie der dazugehörige Aufnahmeschlitz der Scharnierachse oder auch länger, sodass auftretende Seitenkräfte jeweils möglichst großflächig aufgenommen und schadlos übertragen werden können.

Besonders vorteilhaft ist eine Ausführungsform der Funktionsbuchse mit einer von einer kreiszylindrischen abweichenden Form der Mantelfläche, die der Form der Aufnahmeöffnung angepasst ist, wobei die Funktionsfläche im Querschnitt bevorzugt einen mehreckigen Polygonzug aufweist, etwa einen viereckigen Polygonzug mit abgerundeten Ecken, wodurch sichergestellt ist, dass die Funktionsbuchse in der Aufnahmeöffnung des Gelenkbereichs des Brillenbügelscharniers nicht um die Hochachse der Scharnierachse herum mit drehbar festgelegt und formschlüssig gegen ein Verdrehen in der Aufnahmeausnehmung verriegelt ist.

Vorteilhafterweise weist die Funktionsbuchse ein maximales Dickenmaß von dem Dickenmaß des Gelenkbereichs des Brillenbügels auf und der Kragen, der bis auf den Montageschlitz ringförmig ausgebildet ist, ein Dickenmaß, welches den Freiraum zwischen der Unterseite des Gelenkbereiches des Brillenbügels und der diesem Bereich zugewandten Innenfläche der Längsausnehmung ausfüllt und den unteren Vorsprung in allen Funktionsstellungen eines Brillenbügels seitlich umschließt, sodass der Kragen in einer aus der Montageposition verdrehten Stellung des Brillenbügels mit seiner der Unterseite der Längsausnehmung im Gelenkbereich angeordneten Stirnseite darauf aufliegt und seine Innenfläche eine gegenseitige Verrieglung mit dem unteren Vorsprung in der Längsausnehmung bildet.

Bevorzugterweise ist die Scharnierachse einteilig, aber mit unterschiedlichen Durchmessern ausgebildet und weist einen oberen, bis auf den Aufnahmeschlitz scheibenförmigen flachen runden Kopf und einen unteren, dagegen zurückgesetzten kreiszylindrischen Hals auf, wobei die Funktionsbuchse einen dem Durchmessermaß des Halses der Scharnierachse entsprechenden Innendurchmesser aufweist und der Kragen ein dem Maß des Kopfes entsprechenden Außendurchmesser.

Die dem Gelenkbereich des Brillenbügels zugewandte Unterseite des Kopfes der Scharnierachse, der einen größeren Außendurchmesser als das größte Innenmaß der Aufnahmeöffnung aufweist und diese vollständig überdeckt, liegt mit einem Teilbereich seiner der Funktionsbuchse zugewandten Unterseite auf dieser und der darüber überstehende Teilbereich auf der Oberseite des Gelenkbereichs des Brillenbügels auf, sodass trotz der Miniaturisierung des Brillenbügelscharniers noch verhältnismäßig große Flächen ein untereinander spielfreies Drehgelenk bilden können, dessen Schwenkbewegung von der vorzugsweise aus Kunststoff bestehenden Funktionsbuchse gedämpft wird.

Die Funktionsbuchse mit ihrem Montageschlitz ist bevorzugter weise in einem Winkel α zwischen der Längsachse eines Brillenbügels und der Gelenkbacke im Gelenkbereich so eingesetzt, dass dieser geringer ist als ein bei mit Gläsern ausgestattetem Brillengestell möglicher Schwenkwinkel eines Brillenbügels, sodass nach einem Ausschwenken des Brillenbügels aus einer Montageposition und nach erfolgter Montage der Brillengläser eine Demontage des Brillenbügelscharniers unmöglich gemacht ist. Dies verhindert ein unwillentliches Zerlegen des erfinderischen Brillenbügelscharniers.

Vorteilhafterweise ist die Längsausnehmung geschlossen ausgebildet, sodass der vom Gelenkbereich der Brillenbacke zu deren Ende hin weisende innere Bereich eine Anschlagfläche für eine Rastfläche des Brillenbügels bilden kann, der im vollständig aufgeklappten Zustand eines Brillenbügels mit seiner Rastfläche gegen die Anschlagfläche der Brillenbacke anschlägt, wobei gleichzeitig der Gelenkbereich des Brillenbügels bis hin zu der Rastfläche so lang ausgebildet ist, wie das Maß der Längsausnehmung in der Brillenbacke beträgt, sodass in einer vollkommen ausgeschwenkten Position des Brillenbügels die Längsausnehmung der Länge nach ausgefüllt ist.

Entsprechend einer weiteren vorteilhaften Ausgestaltung der Erfindung bildet der vom Gelenkbereich der Brillenbacke zum Brillengestell hin weisende äußere Bereich der Brillenbacke eine Anschlagfläche für eine endseitige Rastfläche des Brillenbügels, sodass die Längsausnehmung in der Brillenbacke zu ihrem Ende hin auch ganz oder teilweise geöffnet und auch verkürzt ausgeführt sein kann, was die Anzahl der möglichen Varianten der erfinderischen Brille weiter vergrößert.

Nachfolgend ist ein Ausführungsbeispiel der Erfindung anhand von Zeichnungen näher beschrieben. Es zeigen:

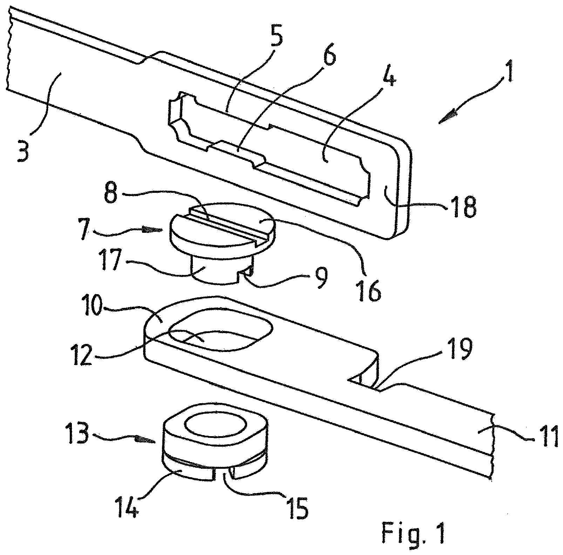

- Fig. 1: eine räumliche Explosionsdarstellung eines Brillenbügelscharniers in Teilansicht von schräg oben,

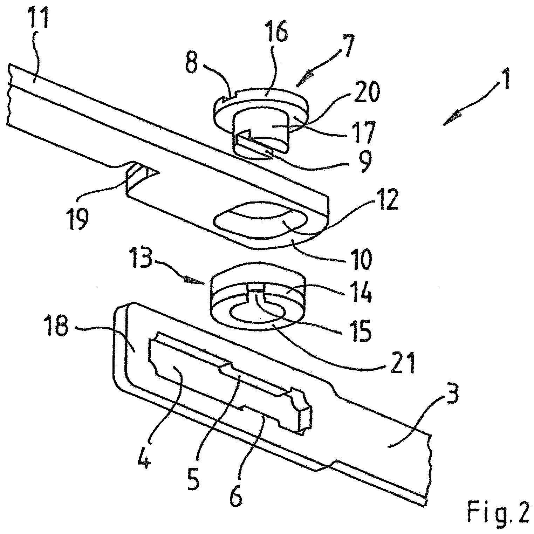

- Fig. 2: eine räumliche Explosionsdarstellung des Brillenbügelscharniers gemäß Fig. 1 in einer Teilansicht von schräg unten,
- Fig. 3: eine räumliche Teilansicht eines Brillengestells in einer Montageposition des Brillenbügelscharniers vor dem vollständigen Einführen des Gelenkbereichs in die Längsausnehmung in einer verkleinerten Darstellung von schräg unten,
- Fig. 4: den Montagezustand des Brillenbügelscharniers in einer räumlichen Teilansicht des Gegenstandes der Fig. 3 von schräg oben,
- Fig. 5: eine Montageposition des Brillenbügelscharniers mit in einer Endposition befindlicher Scharnierachse in einer räumlichen Teilansicht,
- Fig. 6: eine räumliche Teilansicht eines Brillengestells mit fast vollständig in eine Benutzungsposition ausgeschwenktem Brillenbügel, und
- Fig. 7: eine räumliche Teilansicht eines Brillengestells mit fast vollständig in eine Benutzungsposition ausgeschwenktem Brillenbügels einer verkürzten Variante der Gestellbacke mit hinten offener Längsausnehmung.

Die Brillenbacke 3 des Brillengestells 2 besteht aus einem weniger als 1mm dickem Flachmaterial aus Titanblech oder einer Titanlegierung, wobei das Flachmaterial vertikal ausgerichtet ist und eine horizontale Längsausnehmung 4 aufweist mit zwei zueinander gerichteten und parallel voneinander beabstandeten Vorsprüngen 5;6. Der Gelenkbereich 10 des Brillenbügels 11 besteht ebenfalls aus Flachmaterial dieser Dicke aus Titanblech oder einer Titanlegierung und ist im Wesentlichen horizontal ausgerichtet und weist eine vertikale Aufnahmeöffnung 12 für eine Funktionsbuchse 13 auf, die aus Kunststoff gefertigt ist.

Die Funktionsbuchse 13 weist einen inneren Durchmesser auf, der einem Durchmesserbereich der Scharnierachse 7 entspricht ebenso und eine Dicke, die der Dicke des Gelenkbereichs 10 des Brillenbügels 11 entspricht, wobei die Funktionsbuchse einen nach unten erstreckenden Kragen 14 besitzt, mit einem stirnseitigen und sich radial erstreckenden Montageschlitz 15.

Die Scharnierachse 7 weist einen flachen oberen Kopf 16 und einen schmaleren kreiszylindrischen Hals 17 auf, wobei in den Stirnseiten der Scharnierachse 7 obere und untere Aufnahmeschlitze 8;9 eingebracht sind, die in der Länge und Breite mit den Vorsprüngen 5;6 in den Längsausnehmungen 4 der Brillenbacke 3 korrespondieren.

In einer Montagestellung des Brillenbügelscharniers 1 liegen die Aufnahmeschlitze 8;9 der Scharnierachse 7 und der Montageschlitz 15 parallel übereinander, sodass sich der Gelenkbügelbereich 10 zwischen den freien Bereich der Längsausnehmung 4 einfügen und in Richtung der Vorsprünge 5;6 bewegen lässt, die in dieser Position ebenfalls parallel zu den Aufnahmeschlitzen 8;9 und dem Montageschlitz 15 ausgerichtet sind.

Die Unterseite des Kopfes 16 der Scharnierachse 7 liegt anschließend auf der Oberseite des Gelenkbereichs 10 des Brillenbügels 11 und auf der Oberseite der Funktionsbuchse 13 auf und die Unterseite des Gelenkbereichs 10 des Brillenbügels 11 auf den nach oben gerichteten Flächen des Kragens 14 der Funktionsbuchse 13, die ihrerseits mit ihrer Unterseite 21 auf der unteren Innenseite der Längsausnehmung 4 der Brillenbacke aufliegt.

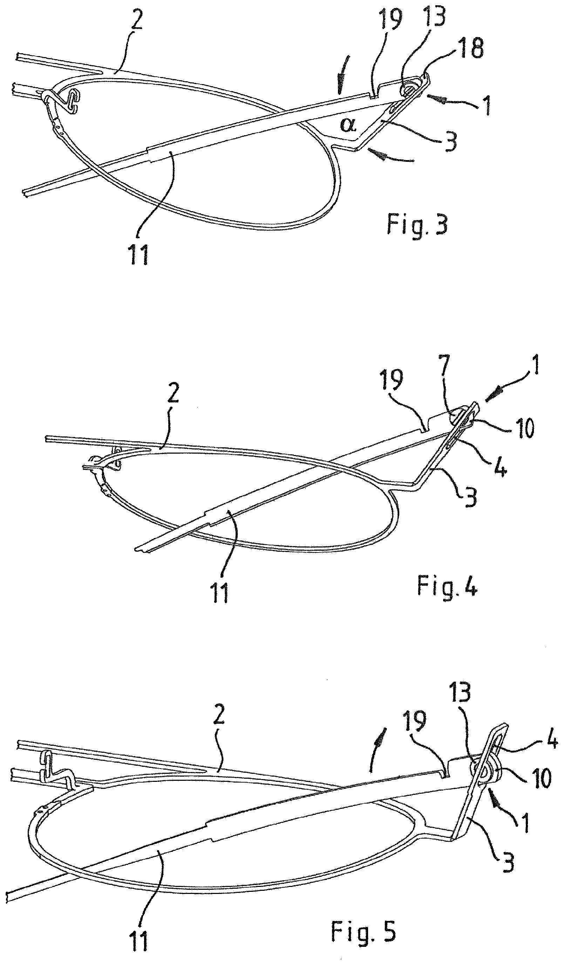

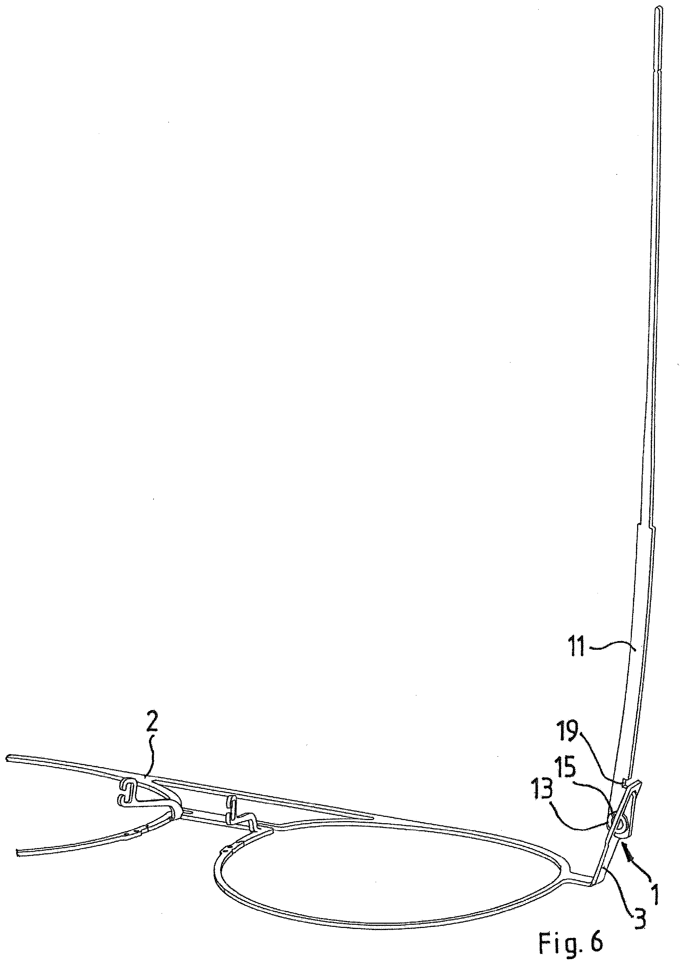

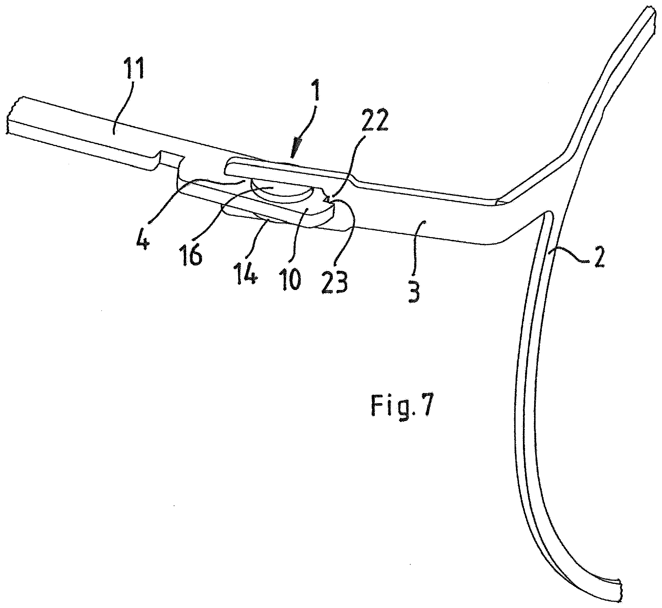

Nach einem Verschwenken des Brillenbügels 11 aus der Montageposition lässt sich dieser bis zu einem Anschlag mit seiner Rastfläche 19;23 an einer Anschlagfläche 18;22 der Brillenbacke 4 bewegen, wobei die Figuren 3 bis 5 den Brillenbügeln 11 in unterschiedlichen Montagepositionen zeigen und die Figuren 6 und 7 den Brillenbügel 11 in einer jeweils fast vollständig aufgeschwenkten Position, wobei Fig. 7 eine hinten offene, verkürzte Brillenbacke 3 zeigt.

## Patentansprüche

1. Brillenbügelscharnier eines Brillengestells aus einer Brillenbacke (3) aus zumindest im Gelenkbereich vertikal ausgerichtetem Flachmaterial mit einer horizontalen Längsausnehmung (4), mit zwei zueinander gerichteten, parallel voneinander beabstandeten Vorsprüngen (4;6) und mit einer Scharnierachse (7) mit beidseitigen stirnseitigen Aufnahmeschlitzen (8;9) für die Vorsprünge (5;6), mit einem Abstand der Böden der Aufnahmeschlitze (8;9) zueinander, der dem Abstand der Vorsprünge (5;6) entspricht und mit einem in die Längsausnehmungen (4) eingreifenden Gelenkbereich (10) eines Brillenbügels (11) mit einer vertikalen Aufnahmeöffnung (12), **dadurch gekennzeichnet, dass** der Brillenbügel (11) im Gelenkbereich (10) aus rechtwinklig gegen den Gelenkbereich der Brillenbacke (3) verdrehtem Flachmaterial besteht und dass in die Aufnahmeöffnung (12) des Brillenbügels (11) eine Funktionsbuchse (13) verdrehfest eingesetzt ist, die einen nach unten daraus hervorstehenden Kragen (14) aufweist, der mit einen stirnseitigen radialen Montageschlitz (15) versehen ist und dass in einer Montageposition des Brillenbügels (11) der Montageschlitz (15) mit den stirnseitigen Aufnahmeschlitzen (8;9) der Scharnierachse (7) und den Vorsprüngen (5;6) fluchtet.

2. Brillenbügelscharnier nach Anspruch 1, **dadurch gekennzeichnet, dass** der der Kragenseite zugeordnete Vorsprung (6) der Längsausnehmung (4) maximal so lang ausgebildet ist, wie das Maß der Länge des dazugehörigen Aufnahmeschlitzes (9) der Scharnierachse (7) beträgt.

3. Brillenbügelscharnier nach einem der vorgenannten Ansprüche, **dadurch gekennzeichnet, dass** die Funktionsbuchse (13) eine von einer zylindrischen Mantelfläche abweichende Mantelfläche aufweist und die Aufnahmeöffnung (12) korrespondierend dazu ausgebildet ist und dass die Funktionsbuchse (13) formschlüssig gegen ein Verdrehen in der Aufnahmeausnehmung (12) verriegelt ist.

4. Brillenbügelscharnier nach einem der vorgenannten Ansprüche, **dadurch gekennzeichnet, dass** die Funktionsbuchse (13) das maximale Dickenmaß des Dickenmaße des Gelenkbereiches (10) des Brillenbügels (11) aufweist und dass der Kragen (14) bis auf den Montageschlitz (15) ringförmig ausgebildet ist und ein Dickenmaß aufweist, welches den Freiraum zwischen der Unterseite des Gelenkbereiches (10) des Brillenbügels (11) und der diesem Bereich zugewandten Innenfläche der Längsausnehmung (4) ausfüllt und den unteren Vorsprung (6) in allen Funktionsstellungen eines Brillenbügels (11) seitlich umschließt.

5. Brillenbügelscharnier nach einem der vorgenannten Ansprüche, **dadurch gekennzeichnet, dass** die Scharnierachse (7) ein oberen flachen, bis auf den Aufnahmeschlitz (8) scheibenförmigen flachen Kopf (16) und einen unteren schmaleren kreiszylindrischen Hals (17) und die Funktionsbuchse (13) und der Kragen (14) einen das dem Durchmessermaß des Halses (17) entsprechenden Innendurchmesser und der Kragen (14) einen dem Maß des Kopfes (16) entsprechenden Außendurchmesser aufweist.

6. Brillenbügelscharnier nach Anspruch 5, **dadurch gekennzeichnet, dass** der Kopf (16) einen größeren Außendurchmesser als das größte Innenmaß der Aufnahmeöffnung (12) aufweist und diese vollständig überdeckt und ein Teilbereich seiner der Funktionsbuchse (7) zugewandten Unterseite auf dieser und der darüber überstehende Bereich auf der Oberseite des Gelenkbereichs (10) des Brillenbügels (11) aufliegt.

7. Brillenbügelscharnier nach einem der vorgenannten Ansprüche, **dadurch gekennzeichnet, dass** die Funktionsbuchse (13) mit ihrem Montagschlitz (15) in einem Winkel α zwischen der Längsachse eines Brillenbügels (11) und der Gelenkbacke (3) im Gelenkbereich (10) eingesetzt ist, der geringer ist als ein bei mit Gläsern ausgestattetem Brillengestell möglicher Schwenkwinkel eines Brillenbügels (11).

8. Brillenbügelscharnier nach einem der vorgenannten Ansprüche, **dadurch gekennzeichnet, dass** der vom Gelenkbereich der Brillenbacke (3) zu deren Ende weisende innere Bereich eine Anschlagfläche (18) bildet und benachbart dem Gelenkbereich (10) des Brillenbügels (11) eine Rastfläche (19) für die Anschlagfläche (18) der Brillenbacke (3) vorgesehen ist.

9. Brillenbügelscharnier nach einem der vorgenannten Ansprüche 1-7, **dadurch gekennzeichnet, dass** der vom Gelenkbereich der Brillenbacke (3) zum Brillengestell (2) hin weisende äußere Bereich der Brillenbacke (3) eine Anschlagfläche (22) bildet und benachbart dem Gelenkbereich (10) des Brillenbügels (11) eine endseitige Rastfläche (23) am Brillenbügel (11) für die Anschlagfläche (22) der Brillenbacke (3) vorgesehen ist.

## Claims

1. Spectacle temple hinge of a spectacle frame, composed of a spectacle endpiece (3) of flat material oriented vertically at least in the joint region with a horizontal longitudinal recess (4), with two projections (4; 6) directed towards each other and spaced apart in parallel from each other, and with a hinge pin (7) having end-face receiving slits (8; 9) on both sides for the projections (5; 6), with the bottoms of the receiving slits (8; 9) being spaced apart from each other by a distance that corresponds to the distance between the projections (5; 6), and with a joint region (10) of a spectacle temple (11) with a vertical receiving opening (12) engaging in the longitudinal recesses (4), **characterized in that** the spectacle temple (11) in the joint region (10) consists of flat material twisted at right angles against the joint region of the spectacle endpiece (3), and **in that** a function bushing (13) is inserted securely against rotation into the receiving opening (12) of the spectacle temple (11), which function bushing (13) has a collar (14) which protrudes from the bottom thereof and which is provided with an end-face radial mounting slit (15), and **in that**, in a mounted position of the spectacle temple (11), the mounting slit (15) is in alignment with the end-face receiving slits (8; 9) of the hinge pin (7) and the projections (5; 6).

2. Spectacle temple hinge according to Claim 1, **characterized in that** the projection (6) of the longitudinal recess (4), assigned to the collar side, has a maximum length amounting to the dimension of the length of the associated receiving slit (9) of the hinge pin (7).

3. Spectacle temple hinge according to one of the preceding claims, **characterized in that** the function bushing (13) has a lateral surface deviating from a cylindrical lateral surface, and the receiving opening (12) is designed correspondingly thereto, and **in that** the function bushing (13) is locked with form-fit engagement against twisting in the receiving recess (12).

4. Spectacle temple hinge according to one of the preceding claims, **characterized in that** the function bushing (13) has the maximum thickness dimension of the thickness dimension of the joint region (10) of the spectacle temple (11), and **in that** the collar (14) is ringshaped, except for the mounting slit (15), and has a thickness dimension which fills the free space between the underside of the joint region (10) of the spectacle temple (11) and the inner face of the longitudinal recess (4) facing this region and laterally encloses the lower projection (6) in all functional positions of a spectacle temple (11).

5. Spectacle temple hinge according to one of the preceding claims, **characterized in that** the hinge pin (7) has an upper flat disc-shaped head (16), flat except for the receiving slit (8), and a lower narrower circular cylindrical neck (17), and the function bushing (13) and the collar (14) have an internal diameter corresponding to the diameter dimension of the neck (17), and the collar (14) has an external diameter corresponding to the dimension of the head (16).

6. Spectacle temple hinge according to Claim 5, **characterized in that** the head (16) has an external diameter greater than the largest internal dimension of the receiving opening (12) and completely covers the latter, and a sub-region of its underside directed towards the function bushing (7) lies on the latter, and the protruding region lies on the upper face of the joint region (10) of the spectacle temple (11).

7. Spectacle temple hinge according to one of the preceding claims, **characterized in that** the function bushing (13) is inserted with its mounting slit (15) at an angle α between the longitudinal axis of a spectacle temple (11) and the joint endpiece (3) in the joint region (10), which angle is smaller than a pivoting angle of a spectacle temple (11) that is possible when the spectacle frame is fitted with lenses.

8. Spectacle temple hinge according to one of the preceding claims, **characterized in that** the inner region facing from the joint region of the spectacle endpiece (3) to the end thereof forms a stop face (18), and a latching face (19) for the stop face (18) of the spectacle endpiece (3) is provided adjacent to the joint region (10) of the spectacle temple (11).

9. Spectacle temple hinge according to one of Claims 1-7, **characterized in that** the outer region of the spectacle endpiece (3) facing from the joint region of the spectacle endpiece (3) to the spectacle frame (2) forms a stop face (22), and an end-side latching face (23) on the spectacle temple (11) for the stop face (22) of the spectacle endpiece (3) is provided adjacent to the joint region (10) of the spectacle temple (11).

## Revendications

1. Charnière de lunettes d'une monture de lunettes constituée d'une partie latérale de lunettes (3) en un matériau plat orienté verticalement au moins dans la région d'articulation et présentant une découpe longitudinale horizontale (4), comprenant deux saillies (4 ; 6) orientées l'une vers l'autre et espacées parallèlement l'une de l'autre et comprenant un axe de charnière (7) présentant des fentes de réception (8 ; 9) frontales de part et d'autre pour les saillies (5 ; 6), avec un écartement des fonds des fentes de réception (8 ; 9) l'un par rapport à l'autre qui correspond à l'écartement des saillies (5 ; 6) et comprenant une région d'articulation (10), venant en prise dans les découpes longitudinales (4), d'une branche de lunettes (11) présentant une ouverture de réception verticale (12), **caractérisée en ce que** la branche de lunettes (11) est, dans la région d'articulation (10), constituée d'un matériau plat mis en rotation perpendiculairement par rapport à la région d'articulation de la partie latérale de lunettes (3), et **en ce qu'**une douille fonctionnelle (13) est insérée de manière bloquée en rotation dans l'ouverture de réception (12) de la branche de lunettes (11), laquelle douille comprend une collerette (14) faisant saillie vers le bas hors de celle-ci, laquelle collerette est dotée d'une fente de montage (15) radiale frontale, et **en ce que**, dans une position de montage de la branche de lunettes (11), la fente de montage (15) est en alignement avec les fentes de réception (8 ; 9) frontales de l'axe de charnière (7) et avec les saillies (5 ; 6).

2. Charnière de lunettes selon la revendication 1, **caractérisée en ce que** la saillie (6) de la découpe longitudinale (4) associée au côté collerette est réalisée au maximum de manière aussi longue que la dimension de la longueur de la fente de réception (9) associée de l'axe de charnière (7).

3. Charnière de lunettes selon l'une des revendications précédentes, **caractérisée en ce que** la douille fonctionnelle (13) présente une surface d'enveloppe différant d'une surface d'enveloppe cylindrique et l'ouverture de réception (12) est formée de manière correspondante à celle-ci, et **en ce que** la douille fonctionnelle (13) est verrouillée par complémentarité de forme de manière à empêcher une rotation dans la découpe de réception (12).

4. Charnière de lunettes selon l'une des revendications précédentes, **caractérisée en ce que** la douille fonctionnelle (13) présente la dimension d'épaisseur maximale des dimensions d'épaisseur de la région d'articulation (10) de la branche de lunettes (11) et **en ce que** la collerette (14) est de forme annulaire à l'exception de la fente de montage (15) et présente une dimension d'épaisseur qui remplit l'espace libre entre le côté inférieur de la région d'articulation (10) de la branche de lunettes (11) et la surface intérieure, tournée vers cette région, de la découpe longitudinale (4) et entoure latéralement la saillie inférieure (6) dans toutes les positions fonctionnelles d'une branche de lunettes (11).

5. Charnière de lunettes selon l'une des revendications précédentes, **caractérisée en ce que** l'axe de charnière (7) présente une tête plate supérieure (16) plate en forme de disque à l'exception de la fente de réception (8) et un col (17) cylindrique circulaire inférieur plus étroit et la douille fonctionnelle (13) et la collerette (14) présentent un diamètre intérieur correspondant à la dimension de diamètre du col (17) et la collerette (14) présente un diamètre extérieur correspondant à la dimension de la tête (16).

6. Charnière de lunettes selon la revendication 5, **caractérisée en ce que** la tête (16) présente un plus grand diamètre extérieur que la plus grande dimension intérieure de l'ouverture de réception (12) et recouvre celle-ci complètement et une région partielle de son côté inférieur tourné vers la douille fonctionnelle (7) repose sur celle-ci et la région faisant saillie au-delà de cette région partielle repose sur le côté supérieur de la région d'articulation (10) de la branche de lunettes (11).

7. Charnière de lunettes selon l'une des revendications précédentes, **caractérisée en ce que** la douille fonctionnelle (13) est insérée dans la région d'articulation (10) avec sa fente de montage (15) suivant un angle α entre l'axe longitudinal d'une branche de lunettes (11) et la partie latérale d'articulation (3), lequel angle est inférieur à un angle de pivotement possible d'une branche de lunettes (11) en cas de montures de lunettes dotée de verres.

8. Charnière de lunettes selon l'une des revendications précédentes, **caractérisée en ce que** la région intérieure orientée à partir de la région d'articulation de la partie latérale de lunettes (3) jusqu'à son extrémité forme une face de butée (18) et, à proximité de la région d'articulation (10) de la branche de lunettes (11), une face d'encliquetage (19) pour la face de butée (18) de la partie latérale de lunettes (3) est prévue.

9. Charnière de lunettes selon l'une des revendications précédentes 1 à 7, **caractérisée en ce que** la région extérieure de la partie latérale de lunettes (3) orientée à partir de la région d'articulation de la partie latérale de lunettes (3) vers la monture de lunettes (2) forme une face de butée (22) et, à proximité de la région d'articulation (10) de la branche de lunettes (11), une face d'encliquetage (23) côté extrémité est prévue sur la branche de lunettes (11) pour la face de butée (22) de la partie latérale de lunettes (3).
